# EUROPEAN PATENT SPECIFICATION

(11) **EP 2 821 306 B1**
(45) Date of publication and mention of the grant of the patent: **21.11.2018**
(21) Application number: 12870055.6
(22) Date of filing: 27.02.2012
(51) Int. Cl.: B60W 20/00, B60K 6/48, B60K 6/547, B60W 10/06, B60W 10/08, B60W 10/10, B60W 20/15, B60W 10/02

(54) **CONTROL DEVICE FOR HYBRID VEHICLE**
STEUERUNGSVORRICHTUNG FÜR EIN HYBRIDFAHRZEUG
DISPOSITIF DE COMMANDE POUR VÉHICULE HYBRIDE

(43) Date of publication of application: 07.01.2015
(73) Proprietor: Toyota Jidosha Kabushiki Kaisha, Toyota-shi, Aichi 471-8571 (JP)
(72) Inventor: TANAKA, Takaaki, Toyota-shi Aichi 471-8571 (JP); TAKAHASHI, Tomoya, Toyota-shi Aichi 471-8571 (JP)
(74) Representative: J A Kemp
(86) International application number: PCT/JP2012/054772
(87) International publication number: WO 2013/128547

(56) References cited:
- WO-A1-2009/109839
- FR-A1- 2 928 122
- JP-A- H 102 241
- JP-A- 2008 030 708
- JP-A- 2009 234 565
- JP-A- 2010 184 535
- JP-A- 2010 184 535

## Description

### Technical Field

The present invention relates to a control apparatus applied to a hybrid vehicle: having an internal combustion engine and an electric motor as driving sources for traveling; being provided with a transmission changing gear stages in response to an operation of a shift lever on a power transmission path between the internal combustion engine and drive wheels; and being allowed to travel in an electrical traveling mode where the internal combustion engine is stopped and the drive wheels are driven by the electric motor and an engine traveling mode where the drive wheels are driven by the internal combustion engine.

### Background Art

There is known a hybrid vehicle having an internal combustion engine and a motor generator as driving sources for traveling. In the hybrid vehicle, an electrical traveling mode where the internal combustion engine is stopped and the vehicle is made to travel by the electric motor; and an engine traveling mode where the vehicle is made to travel by the internal combustion engine are set, and these traveling modes are switched according to a required driving power to the vehicle. Furthermore, there is known a hybrid vehicle where an automatic transmission is mounted and the electric motor and the internal combustion engine are connected with an input side of the transmission and the drive wheels are connected with an output side of the transmission. In addition, as a control apparatus of this vehicle, there is known an apparatus switching the traveling mode to the electrical traveling mode in a case that an accelerator opening degree is equal to or less than a determination value and a predetermined delay time has passed when the traveling mode is the engine traveling mode (see Patent Literature 1) . In the control apparatus, in a case that a driver performs an on/off operation to an accelerator pedal frequently when the traveling mode is the engine traveling mode, the delay time is increased and a switching to the electrical traveling mode is suppressed. Furthermore, in the control apparatus, in a case that the transmission is being upshifted when the traveling mode is the engine traveling mode, the traveling mode is switched to the electrical traveling mode after the upshift of the transmission is completed. In addition, there is Patent Literatures 2-4 as prior art references in relation to the present invention.

JP 2010 184535 A discloses a hybrid vehicle including an engine, a multistage transmission, and a motor/generator. The hybrid vehicle has an engine ECU which controls the engine 10 to be in an operating state even when the driver requests the neutral state with regard of the multistage transmission and if the drive request to the vehicle is higher than a predetermined drive force.

WO 2009/109839 A1 discloses a control apparatus and method of controlling a hybrid vehicle. The vehicle selectively switches between an electric mode and an engine mode. A transition from the engine mode to the electric mode is executed when the accelerator opening becomes less than or equal to a value during the engine mode and a given delay time has expired.

### Citation List

### Patent Literature

Patent Literature 1: JP-2009-234565A
Patent Literature 2: JP-2010-184535A
Patent Literature 3: JP-2010-202054A
Patent Literature 4: JP-2009-292315A

### Summary of Invention

### Technical Problem

There is known a hybrid vehicle having a transmission changing gear stages in response to an operation of a shift lever by a driver. When the driver drives the vehicle like this, the driver may step on the accelerator pedal slowly after a gear shifting for changing the gear stage to a higher gear stage from a present gear stage, that is, an upshift is completed. In the apparatus of the Patent Literature 1, the switching to the electrical traveling mode is suppressed when the on/off operation to the accelerator pedal is performed frequently and during the upshift of the transmission. However, in the apparatus of the Patent Literature 1, a switching of the traveling mode is not suppressed when the accelerator pedal is stepped on slowly after the gear shifting is completed. Thereby, there is a possibility that the traveling mode is switched to the eletrical traveling mode after the gear shifting is completed even though the switching to the electrical traveling mode is unnecessary.

In view of the foregoing, one object of the present invention is to provide a control apparatus for a hybrid vehicle capable of preventing an unnecessary stop of an internal combustion engine during a gear shifting and for a while after the gear shifting is completed.

### Solution to Problem

A control apparatus of the present invention is defined in claim 1.

According to the control apparatus of the present invention, by the switching restriction device, it is possible to restrict the switching to the electric traveling mode in the period from the start of the shift operation until the switching restriction time elapses after the gear shifting is completed. Thereby, it is possible to prevent an unnecessary stop of the internal combustion engine during the gear shifting and for a while after the gear shifting is completed. As the result, since it is possible to decrease the number of times the internal combustion engine is made to restart, it is possible to improve fuel efficiency.

In one embodiment of the control apparatus of the present invention, the switching restriction device may prohibit the switching of the traveling mode to the electric traveling mode by the traveling mode switching device, in a period from the start of the shift operation until the change of the gear stage of the transmission is completed. In general, an accelerator opening degree becomes almost zero during the gear shifting. According to this embodiment, since the switching to the electric traveling mode is prohibited during the gear shifting, it is possible to prevent the unnecessary stop of the internal combustion engine.

By decreasing the value of the determination opening degree as described in the claims, even though an accelerator pedal is stepped on slowly after the gear shifting is completed, it is possible to prevent the unnecessary stop of the internal combustion engine.

### Brief Description of Drawings

Fig. 1 is a schematic diagram showing main portions of a vehicle where a control apparatus according to one embodiment of the present invention is incorporated.
Fig. 2 is a diagram showing a shift pattern of a transmission.
Fig. 3 is a flowchart showing a traveling mode determination control routine executed by a vehicle control apparatus.
Fig. 4 is a graph showing temporal variations of a wheel speed, an accelerator opening degree, a shift position, a rotating speed of an input shaft of a transmission, a state of a first clutch, and a rotating speed of an engine during a gear shifting to a fourth gear from a third gear.
Fig. 5 is a schematic diagram showing main portions of a hybrid vehicle according to a first other embodiment which is applied to the present invention.
Fig. 6 is an enlarged diagram showing a gear stage changing mechanism which is provided on a transmission of the hybrid vehicle of Fig. 5.
Fig. 7 is a schematic diagram showing main portions of a hybrid vehicle according to a second other embodiment which is applied to the present invention.
Fig. 8 is a schematic diagram showing main portions of a hybrid vehicle according to a third other embodiment which is applied to the present invention.
Fig. 9 is a schematic diagram showing main portions of a hybrid vehicle according to a fourth other embodiment which is applied to the present invention.
Fig. 10 is a schematic diagram showing main portions of a hybrid vehicle according to a fifth other embodiment which is applied to the present invention.

### Description of Embodiments

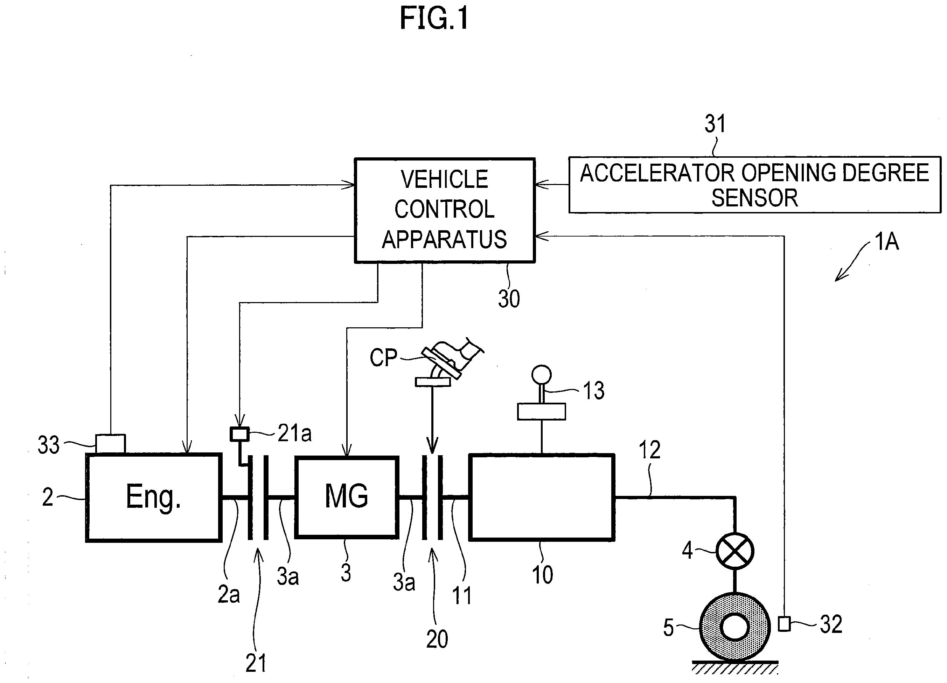

Fig. 1 schematically shows main portions of a vehicle where a control apparatus according to one embodiment of the present invention is incorporated. The vehicle 1A includes an internal combustion engine (hereinafter, referred to as an engine) 2 and a motor generator (hereinafter, referred to as an MG) 3 as an electric motor, as driving sources for travelling. That is, the vehicle 1A is configured as a hybrid vehicle. The engine 2 is a well known spark ignition type internal combustion engine which is mounted on the hybrid vehicle. The MG 3 is a well known motor generator which functions as an electric motor and a generator, and is mounted on the hybrid vehicle.

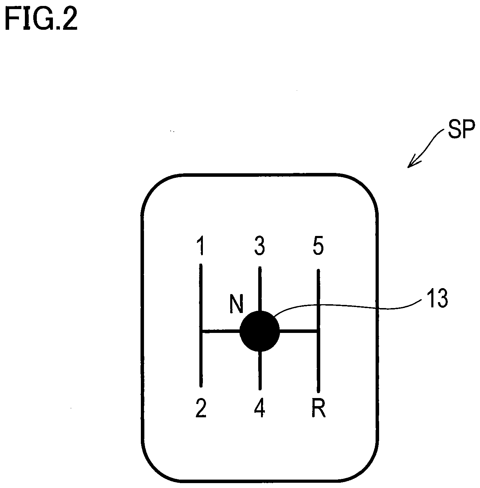

Furthermore, a transmission 10 is mounted on the vehicle 1A. The transmission 10 is configured as a manual transmission providing one-five forward gear stages and one reverse gear stage. The transmission 10 includes an input shaft 11 and an output shaft 12. Gear pairs (not shown) which correspond to first gear to fifth gear are provided between the input shaft 11 and the output shaft 12. Gear ratios are set to the gear pairs respectively, each of the gear ratios differing from each other. The gear ratios are set so as to get smaller in the order of the gear pair of the first gear, the gear pair of the second gear, the gear pair of the third gear, the gear pair of the fourth gear, and the gear pair of the fifth gear. The transmission 10 is configured so as to establish a transmission of rotation selectively by any one of the gear pairs. The transmission 10 includes a shift lever 13 which is operated by a driver. Fig. 2 shows a shift pattern SP of the transmission 10. The driver operates the shift lever 13 according to the shift pattern SP. By the operation, the gear pairs which are used for the transmission of rotation between the input shaft 11 and the output shaft 12 are changed, and the shift stages are changed. Furthermore, the transmission 10 is configured so as to be allowed to change its state to a neutral state where the transmission of rotation between the input shaft 11 and the output shaft 12 is shut off. When the shift lever 13 is operated to a neutral position, the state of the transmission 10 is changed to the neutral state. A structure of the transmission 10 is the same as a structure of a well known manual transmission which is mounted on a vehicle. Thereby, a detailed description of the structure of the transmission 10 will be omitted.

As shown in Fig. 1, the input shaft 11 of the transmission 10 is connected with the rotor shaft 3a of the MG 3 via a first clutch 20. The first clutch 20 is a well known friction clutch. The first clutch 20 is configured so as to be allowed to switch its state between a fully engaged state where the input shaft 11 and the rotor shaft 3a rotate integrally with each other and a release state where the input shaft 11 and the rotor shaft 3a are separated from each other. Furthermore, the first clutch 20 is allowed to switch its state to a state (hereinafter, referred to as a half clutch) where a power is transmitted

between the rotor shaft 3a and the input shaft 11 while the rotor shaft 3a and the input shaft 11 rotate at different rotating speeds from each other. The first clutch 20 is operated by a clutch pedal CP. When the clutch pedal CP is stepped on, the state of the first clutch 20 is switched to the release state. When the clutch pedal CP is released, the state of the first clutch 20 is switched to the fully engaged state. Furthermore, when the clutch pedal CP is partially stepped on, the state of the first clutch 20 is switched to the half clutch. The relation between the clutch pedal CP and the state of the first clutch 20 is the same as the relation in a well known manual clutch. Thereby, a detailed description of the relation between the first clutch 20 and the clutch pedal CP will be omitted.

The rotor shaft 3a of the MG 3 is connected with the output shaft 2a of the engine 2 via a second clutch 21. The second clutch 21 is also a well known friction clutch. The second clutch 21 is configured so as to be allowed to switch its state between an engaged state where the output shaft 2a and the rotor shaft 3a rotate integrally and a release state where the output shaft 2a and the rotor shaft 3a are separated from each other. The second clutch 21 includes an actuator 21a for switching the state of the second clutch 21. As described above, the second clutch 21 is configured as an automatic clutch.

The output shaft 12 of the transmission 10 is connected with a differential mechanism 4. The differential mechanism 4 is a well known mechanism which distributes inputted power to the right and left drive wheels 5. In this figure, only one of the drive wheels 5 is shown.

Operations of the engine 2, the MG 3, and the second clutch 21 are controlled by a vehicle control apparatus 30. The vehicle control apparatus 30 is configured as a computer unit including a microprocessor and peripheral devices, such as a RAM and a ROM, which are necessary for the operations of the microprocessor. The vehicle control apparatus 30 holds various control programs for making the vehicle 1A travel appropriately. The vehicle control apparatus 30 controls control objects such as the engine 2 and the MG 3 by executing these programs. The vehicle control apparatus 30 is connected with various sensors for obtaining information with respect to the vehicle 1A. The vehicle control apparatus 30 is connected with an accelerator opening degree sensor 31, a wheel speed sensor 32, and a crank angle sensor 33, for example. The accelerator opening degree sensor 31 outputs a signal corresponding to an operation amount to the accelerator pedal, that is, an accelerator opening degree. The wheel speed sensor 32 outputs a signal corresponding to a rotating speed of the drive wheel 5. The crank angle sensor 33 outputs a signal corresponding to a rotating speed (the number of revolutions) of the output shaft 2a of the engine 2. In addition, various sensors are further connected to the vehicle control apparatus 30, but they are omitted in the figure.

In the vehicle 1A, plural traveling modes are realized by controlling the operations of the engine 2, the MG 3, and the second clutch 21. As the plural traveling modes, an EV traveling mode, an engine traveling mode, and so on are set. In the EV traveling mode, the state of the second clutch 21 is switched to the release state, and the engine 2 is stopped. And, the vehicle 1A is made to travel by power of the MG 3. Thereby, the EV traveling mode corresponds to an electrical traveling mode of the present invention. On the other hand, in the engine traveling mode, the state of the second clutch 21 is switched to the engaged state. And, the vehicle 1 is made to travel by power of the engine 2 mainly. The vehicle control apparatus 30 switches these traveling modes based on a driving power required to the vehicle 1A by the driver. For example, when a state that the accelerator opening degree is less than a predetermined determination opening degree is continued for a predetermined determination switching time or more, the vehicle control apparatus 30 switches the traveling mode to the EV travel mode. On the other hand, when a state that the accelerator opening degree is equal to or greater than the determination opening degree is continued for the predetermined determination switching time or more, the vehicle control apparatus 30 switches the traveling mode to the engine traveling mode. By switching the traveling mode in this manner, the vehicle control apparatus 30 functions as a traveling mode switching device of the present invention.

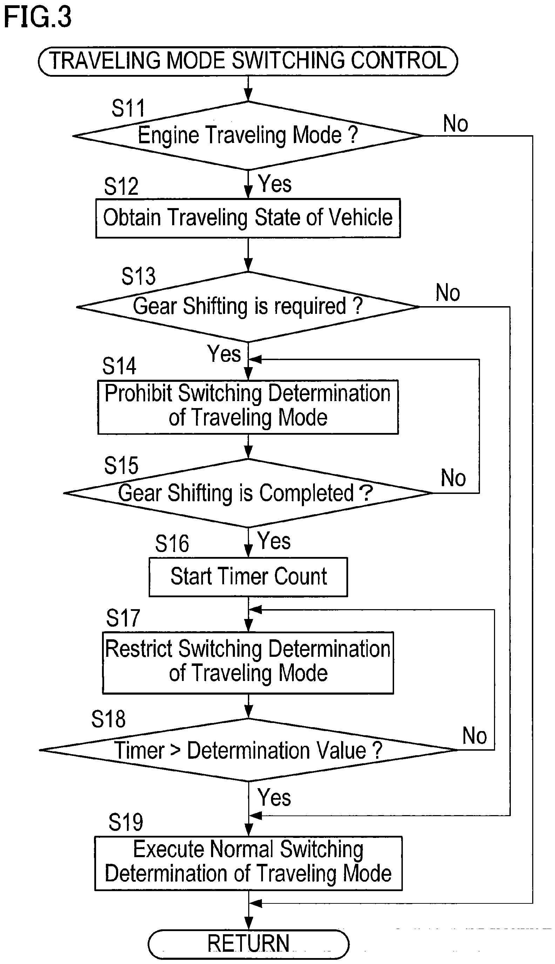

The driver decreases the accelerator opening degree, when the driver changes the gear stage to a higher gear stage from the present gear stage, that is, performs an upshift operation. And, the driver may step on the accelerator pedal slowly after completing the upshift. In this case, there is a possibility that a state that the accelerator opening degree is equal to or less than the above determination opening degree is continued for the determination switching time or more. The vehicle control apparatus 30 controls a switching of the traveling mode so that an unnecessary switching of the traveling mode to the EV traveling mode is not performed during the gear shifting and after the gear shifting is completed. Fig. 3 shows a traveling mode switching control routine which the vehicle control apparatus 30 executes for controlling the switching of the traveling mode in this manner. The vehicle control apparatus 30 repeatedly executes this control routine at predetermined intervals while the vehicle 1A is traveling. Furthermore, the vehicle control apparatus 30 executes this control routine in parallel to the other routines executed by the vehicle control apparatus 30. By executing this control routine, the vehicle control apparatus 30 functions as a switching restriction device of the present invention.

In the control routine, the vehicle control apparatus 30 first determines whether or not the present traveling mode is the engine traveling mode in step S11. When the vehicle control apparatus 30 determines that the present traveling mode is not the engine traveling mode, the vehicle control apparatus 30 ends the present control routine. On the other hand, when the vehicle control apparatus 30 determines that the present traveling mode is the engine traveling mode, the vehicle control apparatus 30 goes to the step S12 and obtains a traveling state of the vehicle 1A. The vehicle control apparatus 30 obtains the accelerator opening degree, the rotating speed of the drive wheel 5, the rotating speed of the output shaft 2a of the engine 2, and so on as the traveling state of the vehicle 1A. Furthermore, the vehicle control apparatus 30 also obtains the present gear stage in this step. The gear stage may be obtained based on a ratio between the rotating speed of the drive wheel 5 and the rotating speed of the output shaft 2a, for example. In the next step S13, the vehicle control apparatus 30 determines whether or not the gear shifting has been required to the vehicle 1A. If the gear shifting is required, the clutch pedal CP is stepped on and the state of the first clutch 20 is switched to the release state. Thus, for example, the gear ratio of the present gear stage and a ratio between the rotating speed of the output shaft 2a and the rotating speed of the drive wheel 5 are compared with each other. And, when the difference between these ratios is big, the vehicle control apparatus 30 may determine that the gear shifting has been required. When the vehicle control apparatus 30 determines that the gear shifting is not required, the vehicle control apparatus 30 skips steps S14 to S18 and goes to step S19.

On the other hand, the vehicle control apparatus 30 determines that the gear shifting has been required, the vehicle control apparatus 30 goes to the step S14 and prohibits a switching determination of the traveling mode. In this process, for example, the determination opening degree may be set to a value of 0 or less. As a result, the switching to the EV traveling mode is prohibited. In the next step S15, the vehicle control apparatus 30 determines whether or not the gear shifting has been completed. When the gear shifting has been completed, the gear stage of the transmission 10 has been changed to any one of the first gear to fifth gear and the state of the first clutch 20 has been switched to the fully engaged state. Thus, when the ratio between the rotating speed of the drive wheel 5 and the rotating speed of the output shaft 2a is almost the same as a gear ratio which is any one of the gear ratios of the gear stages of the transmission 10, the vehicle control apparatus 30 may determine that the gear shifting has been completed. When the vehicle control apparatus 30 determines that the gear shifting is still ongoing, the vehicle control apparatus 30 returns to the step S14 and executes the processes of the steps S14 and S15 repeatedly until the gear shifting is completed.

On the other hand, when the vehicle control apparatus 30 determines that the gear shifting is finished, the vehicle control apparatus 30 goes to the step S16 and resets a timer for measuring an elapsed time from a time when the gear shifting is completed, and then starts measuring the elapsed time. In the nest step S17, the vehicle control apparatus 30 restricts the switching determination of the traveling mode. A determination opening degree in a case that the switching determination of the traveling mode is neither prohibited nor restricted, is referred to as a normal determination opening degree. In this process, the determination opening degree may be set to a value which is less than the normal determination opening degree. In general, the driver steps on the accelerator pedal slowly while releasing the clutch pedal CP when the gear shifting has been completed. Thereby, when the state of the first clutch 20 has been switched to the fully engaged state, the accelerator opening degree is increased to some degree. Accordingly, by decreasing the determination opening degree in this manner, the switching to the EV traveling mode is restricted.

In the next step S18, the vehicle control apparatus 30 determines whether or not a value of the timer is greater than a predetermined determination value. The determination value is set to a time in which it is possible to prevent the unnecessary switching of the traveling mode to the EV traveling mode when the gear shifting has been completed, for example. In particular, the determination value is set to a few seconds. When the vehicle control apparatus 30 determines that the value of the timer is equal to or less than the determination value, the vehicle control apparatus 30 returns to the step S17 and executes the processes of the steps S17 and S18 repeatedly until the value of the timer is greater than the determination value. Thereby, the determination value corresponds to a switching restriction time of the present invention.

On the other hand, when the vehicle control apparatus 30 determines that the value of the timer is greater than the determination value, the vehicle control apparatus 30 goes to the step S19 and executes a normal switching determination of the traveling mode. In other words, the switching determination of the traveling mode is executed with the normal determination opening degree. Thereafter, the vehicle control apparatus 30 ends the present control routine.

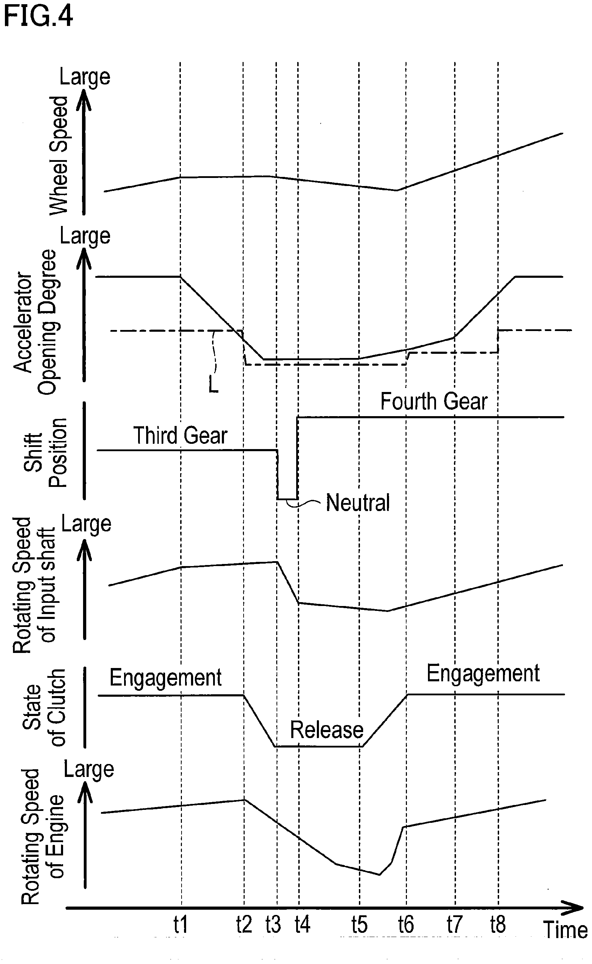

Fig. 4 shows temporal variations of the wheel speed, the accelerator opening degree, the shift position, the rotating speed of the input shaft 11, the state of the first clutch 20, and the rotating speed of the engine 2 during the gear shifting to a fourth gear from a third gear. Furthermore, in this graph, a temporal variation of the determination opening degree is shown by an alternate long and short dash line L. In an example of this graph, the accelerator opening degree is deceased gradually from time t1 because of the gear shifting. And, the clutch pedal CP begins to be stepped on at time t2. Thereby, the step S13 in Fig. 3 is affirmative at the time t2, and the switching determination of the traveling mode is prohibited. Accordingly, the determination value is set to the value of 0 or less.

Thereafter, the state of the first clutch 20 is switched to the release state at time t3. Furthermore, the shift lever 13 is changed to the neutral position from the third gear position at the time t3. Thereafter, the shift lever 13 is changed to the fourth gear position at time t4. And, the clutch pedal CP is released gradually from time t5, and the state of the first clutch 20 is switched to the engaged state at time t6. Thereby, the step S15 in Fig. 3 is affirmative at the time t6, and the switching determination of the traveling mode is restricted. Accordingly, the value of the determination opening degree is set to a value which is greater than 0 and is less than the normal determination opening degree. Furthermore, as shown in this graph, the accelerator pedal is stepped on slowly from the time t5 to time t7. Thereafter, at time t8, an affirmative determination is obtained in the step S18 in Fig. 3, and the value of the determination opening degree is returned to the normal determination opening degree.

As shown in this graph, by executing the control routine of Fig. 3, the determination opening degree is less than the accelerator opening degree in a period from shortly after the time t2 to the time t8. Thereby, the traveling mode is hard to switch to the EV traveling mode during the gear shifting and for a while after the gear shifting is completed.

As described above, in the present invention, since the switching determination of the traveling mode is prohibited during the gear shifting, it is possible to prevent the traveling mode from switching to the EV traveling mode. Furthermore, the switching determination of the traveling mode is restricted for a while after the gear shifting is completed. Thereby, even though the accelerator pedal is stepped on slowly, it is possible to suppress switching the traveling mode to the EV traveling mode. Accordingly, it is possible to prevent an unnecessary stop of the engine 2 during the gear shifting and for a while after the gear shifting is completed. As the result, since it is possible to decrease the number of times the engine 2 is made to restart, it is possible to improve fuel efficiency.

In the above described embodiment, the second clutch 21 is not limited to the friction clutch. The second clutch 21 can be a clutch which is able to transmit and shut off a power transmission between the output shaft 2a of the engine 2 and the rotor shaft 3a of the MG 3. Thereby, the second clutch 21 can be an electromagnetic clutch or a dog clutch, for example.

The determination method in the step S13 of Fig. 3 is not limited to the above described determination method. For example, in a case that the vehicle 1A is provided with a clutch pedal sensor which outputs a signal depending on whether or not the clutch pedal CP is stepped on, the vehicle control apparatus 30 may determine that the gear shifting is required when the clutch pedal is stepped on. Furthermore, in a case that the transmission 10 is provided with a neutral switch which outputs a signal when the shift lever 13 is in the neutral position, the vehicle control apparatus 30 may determine that the gear shifting is required when the signal is output from the neutral switch. In addition, in a case that the transmission 10 is provided with an input shaft rotating speed sensor which outputs a signal corresponding to the number of revolutions (the rotating speed) of the input shaft 11, the vehicle control apparatus 30 may determine that the gear shifting is required by using the rotating speed of the input shaft 11 instead of the rotating speed of the engine 2. In this case, for example, the gear ratio of the present gear stage and a ratio between the rotating speed of the input shaft 11 and the rotating speed of the drive wheel 5 are compared with each other. And, when the difference between these ratios is big, the vehicle control apparatus 30 may determine that the gear shifting is required.

Furthermore, the determination method in the step S15 of Fig. 3 is not limited to the above described determination method. For example, in a case that the vehicle 1A is provided with the above clutch pedal sensor, the vehicle control apparatus 30 may determine that the gear shifting is completed when the clutch pedal is released. In a case that the transmission 10 is provided with a shift sensor which outputs a signal corresponding to a gear stage which is selected with the shift lever 13, the vehicle control apparatus 30 may determine that the gear shifting is completed when a signal corresponding to any one of the gear stages is output from the shift sensor. In a case that the transmission 10 is provided with the input shaft rotating speed sensor mentioned above, the vehicle control apparatus 30 may determine whether or not the gear shifting is required by using the rotating speed of the input shaft 11 instead of the rotating speed of the engine 2. In this case, for example, when a ratio between the rotating speed of the input shaft 11 and the rotating speed of the drive wheel 5 is almost the same as a gear ratio of any one of the gear stages of the transmission 10, the vehicle control apparatus 30 may determine that the gear shifting is completed.

A method for restricting the switching determination of the traveling mode is not limited to the above method. As described above, the traveling mode is switched to the EV traveling mode from the engine traveling mode in a case that the state that the accelerator opening degree is less than the predetermined determination opening degree is continued for the determination switching time or more. Thus, by extending the determination switching time, the switching determination of the traveling mode may be restricted.

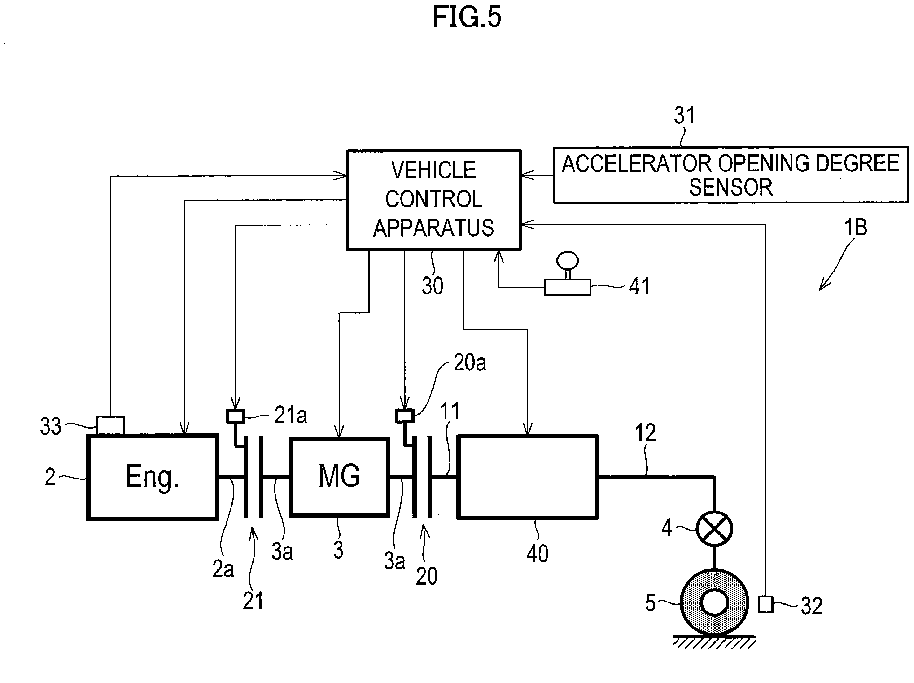

A hybrid vehicle to which the present invention is applied is not limited to the vehicle shown in Fig. 1 and Fig. 2. The present invention may be applied to various vehicles which have a transmission which allows the driver to manipulate the gear shifting, and are able to make the vehicle to travel with only the MG 3 while separating the engine 2 from the drive wheels 5. Hybrid vehicles according to other embodiments to which the present invention is applied will be described with reference to Figs. 5 to 10. In these figures, the same components as those in Fig. 1 or Fig. 2 are denoted by the same reference numerals, and descriptions thereof will be omitted.

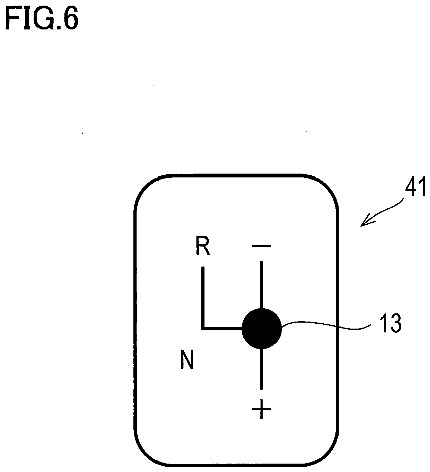

A first other embodiment will be described with reference to Figs. 5 and 6. Fig. 5 schematically shows main portions of a hybrid vehicle 1B according to this embodiment. As shown in this figure, in the vehicle 1B, the first clutch 20 is an automatic clutch. Thereby, the vehicle 1B does not have the clutch pedal CP. The vehicle 1B has a shift device 41 for the driver to instruct to change the gear stages. The shift device 41 is connected with the vehicle control apparatus 30. The shift device 41 outputs a signal corresponding to a selected gear stage. The vehicle control apparatus 30 changes the gear stage of the transmission 40 based on the output signal from the shift device 41. Fig. 6 is an enlarged view showing the shift device 41. As shown in this figure, in the shift device 41, the gear stage is selected when the shift lever 13 is operated to the positions of "+" or "-" shown in this figure. The vehicle control apparatus 30 upshifts by one stage, when the shift lever 13 is operated to the "+" position. On the other hand, the vehicle control apparatus 30 downshifts by one stage, when the shift lever 13 is operated to the "-" position. In this case, the vehicle control apparatus 30 controls the operation of the first clutch 20 so that the gear stages of the transmission 40 are changed without an engine stall. In this manner, the transmission 40 is configured as a semi-automatic transmission.

Also in the vehicle 1B, the EV traveling mode and the engine traveling mode are realized as the traveling modes. In the EV traveling mode, the state of the second clutch 21 is switched to the release state, and the engine 2 is stopped. And, the vehicle 1B is made to travel with the power of the MG 3. On the other hand, in the engine traveling mode, the state of the second clutch 21 is switched to the engaged state. And, the vehicle 1B is made to travel mainly with the power of the engine 2 mainly. And, in the vehicle 1B, also, the vehicle control apparatus 30 switches these traveling modes based on the accelerator opening degree.

In such the vehicle 1B, the driver may decrease the accelerator opening degree when performing an upshift operation, and may step on the accelerator pedal slowly after the gear shifting is completed. Thereby, by applying the present invention, it is possible to prevent an unnecessary stop of the engine 2 during the gear shifting and for a while after the gear shifting is completed. Thereby, it is possible to improve fuel efficiency.

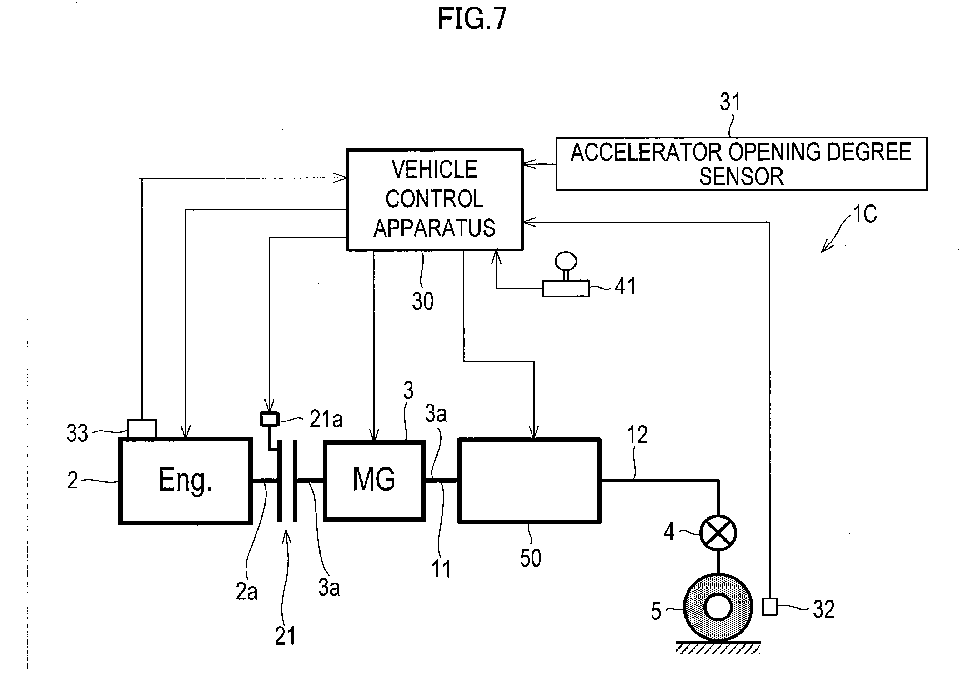

A second other embodiment will be described with reference to Fig. 7. This figure schematically shows main portions of a hybrid vehicle 1C according to the second other embodiment. As shown in this figure, in this embodiment, the first clutch 20 is omitted. Thereby, the input shaft 11 of a transmission 50 and the rotor shaft 3a of the MG 3 are connected with each other so as to rotate integrally. Although not shown, a well known torque converter is provided in the transmission 50. That is, the transmission 50 is configured as an automatic transmission. Furthermore, the vehicle 1C also has the shift device 41 as with the vehicle 1B mentioned above. Thereby, in the vehicle 1C, the driver is able to select the gear stage.

Also in the vehicle 1C, the EV traveling mode and the engine traveling mode are realized as the traveling modes. In the EV traveling mode, the state of the second clutch 21 is switched to the release state, and the engine 2 is stopped. And, the vehicle 1C is made to travel with the power of the MG 3. On the other hand, in the engine traveling mode, the state of the second clutch 21 is switched to the engaged state. And, the vehicle 1C is made to travel with the power of the engine 2 mainly. And, in the vehicle 1C, the vehicle control apparatus 30 switches these traveling modes based on the accelerator opening degree.

In such the vehicle 1C, the driver may decrease the accelerator opening degree when performing an upshift operation, and may steps on the accelerator pedal slowly after the gear shifting is completed. Thereby, by applying the present invention, it is possible to prevent an unnecessary stop of the engine 2 during the gear shifting and for a while after the gear shifting is completed. Thereby, it is possible to improve fuel efficiency.

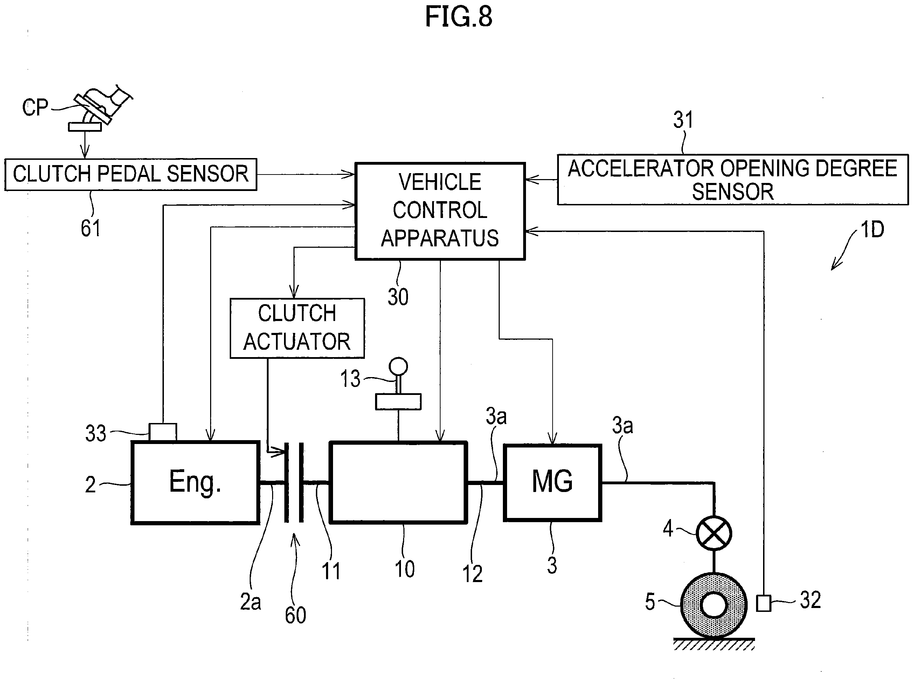

A third other embodiment will be described with reference to Fig. 8. This figure schematically shows main portions of a hybrid vehicle 1D according to the third other embodiment. As shown in this figure, in this embodiment, the output shaft 2a of the engine 2 and the input shaft 11 of the transmission 10 are connected with each other via a clutch 60. The clutch 60 is an automatic clutch. And, the output shaft 12 of the transmission 10 and the rotor shaft 3a of the MG 3 are connected with each other so as to rotate integrally. Furthermore, the rotor shaft 3a of the MG 3 is also connected with the differential mechanism 4. A clutch pedal sensor 61 is provided on the clutch pedal CP. And, the vehicle 1D has a clutch-by-wire system which determines requests of the driver and requests of a control system to control the clutch 60.

Also in the vehicle 1D, the EV traveling mode and the engine traveling mode are realized as the traveling modes. In the EV traveling mode, the clutch 60 is released, and the engine 2 is stopped. And, the vehicle 1D is made to travel with the power of the MG 3. On the other hand, in the engine traveling mode, the clutch 60 is controlled according to the requests of the driver. And, the vehicle 1D is made to travel mainly with the power of the engine 2. And, in the vehicle 1D, the vehicle control apparatus 30 switches these traveling modes based on the accelerator opening degree.

Also in such the vehicle 1D, the driver may decrease the accelerator opening degree when performing an upshift operation, and may step on the accelerator pedal slowly after the gear shifting is completed. Thereby, by applying the present invention, it is possible to prevent an unnecessary stop of the engine 2 during the gear shifting and for a while after the gear shifting is completed. Thereby, it is possible to improve fuel efficiency. In the vehicle 1D, the clutch 60 can be a manual-type clutch. In this case, in the EV traveling mode, the state of the transmission 10 may be switched to the neutral state. As the result, it is possible to separate the engine 2 and the MG 3 from each other.

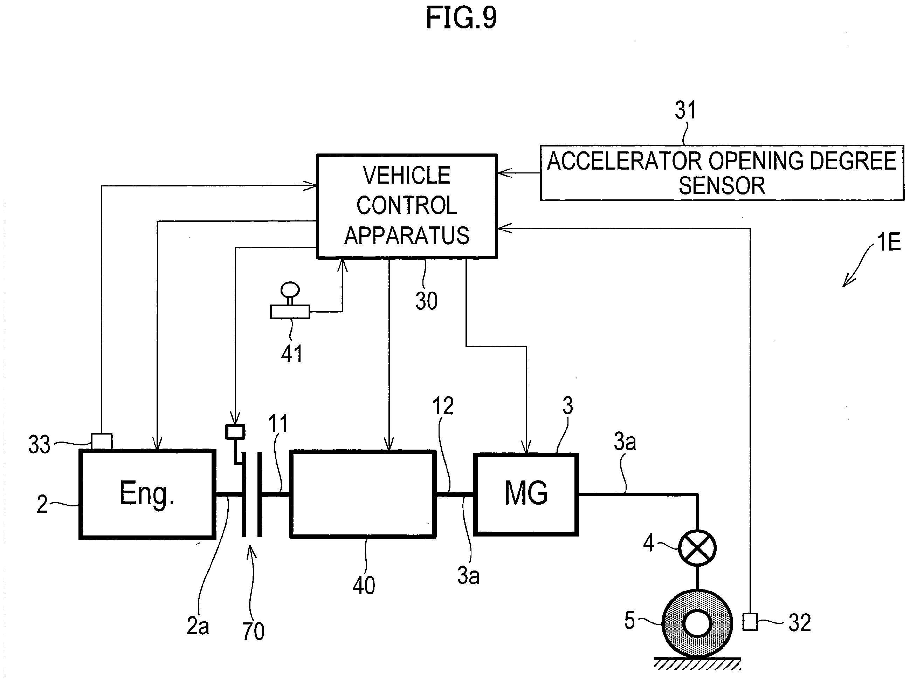

A fourth other embodiment will be described with reference to Fig. 9. This figure schematically shows main portions of a hybrid vehicle 1E according to the fourth other embodiment. In this embodiment, the vehicle 1E has the transmission 40 which is configured as the semi-automatic transmission as with the first other embodiment. And, the transmission 40 is provided between the engine 2 and the MG 3 as with the third other embodiment. The output shaft 2a of the engine 2 and the input shaft 11 of the transmission 40 are connected with each other via a clutch 70. The clutch 70 is the automatic clutch as with the above second clutch 21. And, the output shaft 12 of the transmission 40 and the rotor shaft 3a of the MG 3 are connected with each other so as to rotate integrally. Furthermore, the rotor shaft 3a of the MG 3 is also connected with the differential mechanism 4.

Also in the vehicle 1E, the EV traveling mode and the engine traveling mode are realized as the traveling modes. In the EV traveling mode, a state of the clutch 70 is switched to a release state, and the engine 2 is stopped. And, the vehicle 1E is made to travel with the power of the MG 3. On the other hand, in the engine traveling mode, the state of the clutch 70 is switched to an engaged state. And, the vehicle 1E is made to travel mainly with the power of the engine 2. And, in the vehicle 1E, the vehicle control apparatus 30 switches these traveling modes based on the accelerator opening degree.

Also in such the vehicle 1E, the driver may decrease the accelerator opening degree when performing an upshift operation, and may step on the accelerator pedal slowly after the gear shifting is completed. Thereby, by applying the present invention, it is possible to prevent an unnecessary stop of the engine 2 during the gear shifting and for a while after the gear shifting is completed. Thereby, it is possible to improve fuel efficiency.

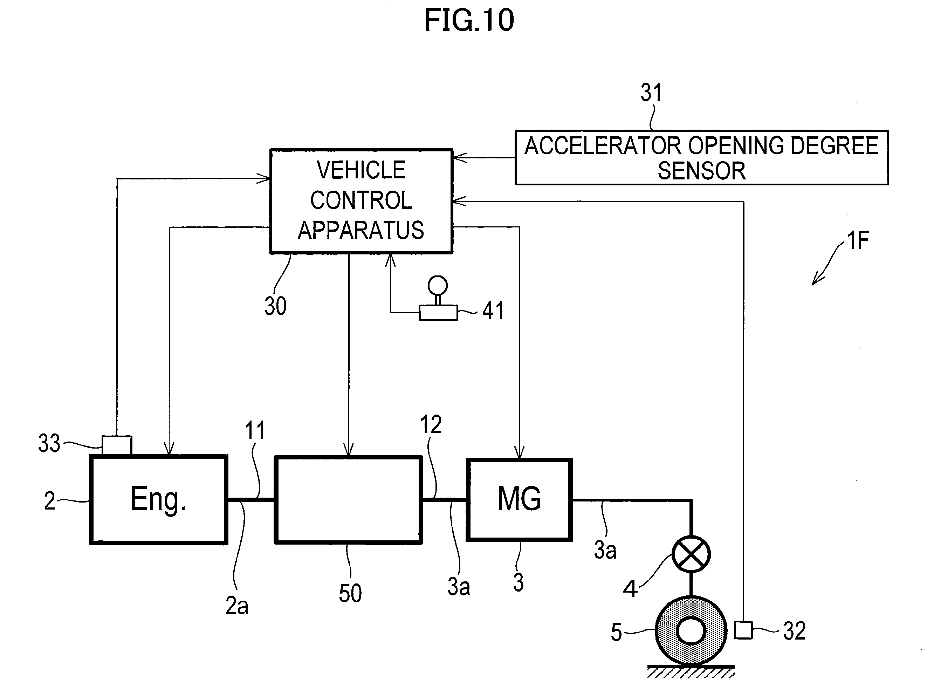

A fifth other embodiment will be described with reference to Fig. 10. This figure schematically shows main portions of a hybrid vehicle 1F according to the fifth other embodiment. In this embodiment, the vehicle 1F has the transmission 50 which is configured as the automatic transmission as with the second other embodiment. And, the transmission 50 is provided between the engine 2 and the MG 3 as with the third other embodiment. In the embodiment, the output shaft 2a of the engine 2 and the input shaft 11 of the transmission 50 are connected with each other so as to rotate integrally. And, the output shaft 12 of the transmission 50 is connected with the rotor shaft 3a of the MG 3 so as to rotate integrally. Furthermore, the rotor shaft 3a of the MG 3 is also connected with the differential mechanism 4.

Also in the vehicle 1F, the EV traveling mode and the engine traveling mode are realized as the traveling modes. In the EV traveling mode, a state of the transmission 50 is switched to the neutral state, and the engine 2 is stopped. And, the vehicle 1F is made to travel with the power of the MG 3. On the other hand, in the engine traveling mode, a gear stage of the transmission 50 is changed to an appropriate gear stage. And, the vehicle 1F is made to travel mainly with the power of the engine 2. And, in the vehicle 1F, the vehicle control apparatus 30 switches these traveling modes based on the accelerator opening degree.

Also in such the vehicle 1F, the driver may decrease the accelerator opening degree when performing an upshift operation, and may step on the accelerator pedal slowly after the gear shifting is completed. Thereby, by applying the present invention, it is possible to prevent an unnecessary stop of the engine 2 during the gear shifting and for a while after the gear shifting is completed. Thereby, it is possible to improve fuel efficiency.

The present invention is not limited to the above-described embodiments, and various modifications of the present invention may be provided without departing form the scope of the invention as defined by the claims. For example, the transmission of the vehicle to which the present invention is applied is not limited to a transmission the top gear of which is a 5th gear. The transmission may be a transmission the top gear of which is a 4th gear or less, or 6th gear or more, for example. Furthermore, the hybrid vehicle to which the present invention is applied may have an electric motor instead of the motor generator.

## Claims

1. A control apparatus (30) which is applied to a hybrid vehicle (1A),
the hybrid vehicle having: an internal combustion engine (2) and an electric motor (3) as driving sources for traveling; and
a transmission (10) having plural gear stages where different gear ratios are set from each other and changing the gear stages in response to an operation to a shift lever,
the transmission being provided in a power transmission path between the internal combustion engine and drive wheels, and
the electric motor (3) being provided so as to drive the drive wheels, and
the hybrid vehicle (1A) being allowed to travel in an electric traveling mode where the internal combustion engine is stopped and the drive wheels are driven by the electric motor, and an engine traveling mode where the drive wheels are driven by the internal combustion engine,
the control apparatus (30) including a traveling mode switching device, configured to switch a traveling mode of the vehicle to the electric traveling mode, in a case that the traveling mode switching device determines that an accelerator opening degree of the vehicle is less than a determination opening degree when the vehicle is in the engine traveling mode, wherein
the control apparatus further includes a switching restriction device, configured to restrict a switching of the traveling mode by the traveling mode switching device, so that the traveling mode of the vehicle is hard to switch to the electric traveling mode in a period from a start of a shift operation until a predetermined switching restriction time elapses after a change of the gear stage of the transmission is completed, in a case that the shift operation of the transmission is performed when the vehicle is in the engine traveling mode,
wherein the switching restriction device is configured to decrease a value of the determination opening degree so as to be less than a value of the determination opening degree which is set when the switching of the traveling mode of the vehicle is not restricted, in a period from the change of the gear stage of the transmission is completed until the predetermined switching restriction time elapses.

2. The control apparatus according to claim 1, wherein
the switching restriction device is configured to prohibit the switching of the traveling mode to the electric traveling mode by the traveling mode switching device, in a period from the start of the shift operation until the change of the gear stage of the transmission is completed.

## Patentansprüche

1. Steuergerät (30), das auf ein Hybridfahrzeug (1A) angewendet wird,
wobei das Hybridfahrzeug Folgendes aufweist: einen Verbrennungsmotor (2) und einen Elektromotor (3) als Antriebsquellen zum Fahren; und
wobei ein Getriebe (10) mehrere Gangstufen aufweist, bei denen verschiedene Gangverhältnisse voneinander eingestellt sind, und die Gangstufen als Reaktion auf eine Betätigung eines Schalthebels wechselt,
wobei das Getriebe in einem Kraftübertragungsweg zwischen dem Verbrennungsmotor und den Antriebsrädern bereitgestellt ist und
wobei der Elektromotor (3) bereitgestellt ist, um die Antriebsräder anzutreiben, und wobei dem Hybridfahrzeug (1A) ermöglicht wird, in einem elektrischen Fahrmodus, bei dem der Verbrennungsmotor gestoppt ist und die Antriebsräder von dem Elektromotor angetrieben werden, und einem Motorfahrmodus, bei dem die Antriebsräder von dem Verbrennungsmotor angetrieben werden, zu fahren,
wobei das Steuergerät (30) eine Fahrmodus-Umschaltvorrichtung beinhaltet, die konfiguriert ist, einen Fahrmodus des Fahrzeugs zu dem elektrischen Fahrmodus umzuschalten, in einem Fall, dass die Fahrmodus-Umschaltvorrichtung bestimmt, dass ein Gaspedalöffnungsgrad des Fahrzeugs geringer ist als ein Bestimmungsöffnungsgrad, wenn sich das Fahrzeug im Motorfahrmodus befindet, wobei
das Steuergerät ferner eine Umschaltbegrenzungsvorrichtung beinhaltet, die konfiguriert ist, ein Umschalten des Fahrmodus durch die Fahrmodus-Umschaltvorrichtung zu begrenzen, sodass es in einem Zeitraum vom Anfang eines Schaltvorgangs bis eine vorgegebene Umschaltbegrenzungszeit abläuft, nachdem ein Wechsel der Gangstufe des Getriebes abgeschlossen ist, schwierig ist, den Fahrmodus des Fahrzeugs zum elektrischen Fahrmodus umzuschalten, in einem Fall, dass der Schaltvorgang des Getriebes ausgeführt wird, wenn sich das Fahrzeug im Motorfahrmodus befindet,
wobei die Umschaltbegrenzungsvorrichtung konfiguriert ist, in einem Zeitraum, von dem Wechsel der Gangstufe des Getriebes abgeschlossen ist, bis die vorgegebene Umschaltbegrenzungszeit abläuft, einen Wert des Bestimmungsöffnungsgrads zu verringern, sodass dieser geringer ist als ein Wert des Bestimmungsöffnungsgrads, der eingestellt wird, wenn das Umschalten des Fahrmodus des Fahrzeugs nicht begrenzt ist.

2. Steuergerät nach Anspruch 1, wobei
die Umschaltbegrenzungsvorrichtung konfiguriert ist, in einem Zeitraum vom Anfang des Schaltvorgangs bis der Wechsel der Gangstufe des Getriebes abgeschlossen ist, das Umschalten des Fahrmodus zum elektrischen Fahrmodus durch die Fahrmodus-Umschaltvorrichtung zu verhindern.

## Revendications

1. Appareil de commande (30) qui est appliqué à un véhicule hybride (1A),
le véhicule hybride comportant : un moteur à combustion interne (2) et un moteur électrique (3) en tant que sources motrices permettant de se déplacer ; et
une transmission (10) présentant plusieurs étages d'engrenage où différents rapports d'engrenage sont définis les uns par rapport aux autres et changeant les étages de vitesse en réponse à une opération sur un levier de vitesse,
la transmission étant disposée dans un trajet de transmission de puissance entre le moteur à combustion interne et des roues motrices, et
le moteur électrique (3) étant disposé de manière à entraîner les roues motrices, et
le véhicule hybride (1A) pouvant se déplacer dans un mode de déplacement électrique où le moteur à combustion interne est arrêté et les roues motrices sont entraînées par le moteur électrique, et le mode de déplacement de moteur où les roues motrices sont entraînées par le moteur à combustion interne,
l'appareil de commande (30) comprenant un dispositif de commutation de mode de déplacement, conçu pour commuter un mode de déplacement du véhicule vers le mode de déplacement électrique, au cas où le dispositif de commutation de mode de déplacement détermine qu'un degré d'ouverture d'accélérateur du véhicule est inférieur à un degré d'ouverture de détermination lorsque le véhicule est dans un mode de déplacement de moteur,
l'appareil de commande comprenant en outre un dispositif de restriction de commutation, conçu pour restreindre une commutation du mode de déplacement par le dispositif de commutation de mode de déplacement, de manière que le mode de déplacement du véhicule est difficile à commuter vers le mode de déplacement électrique dans une période allant d'un début d'une opération de changement de vitesse à l'écoulement d'un temps de restriction de commutation prédéterminé après la fin d'un changement de l'étage d'engrenage de la transmission, au cas où l'opération de changement de vitesse de la transmission est effectuée lorsque le véhicule est dans le mode de déplacement de moteur,
le dispositif de restriction de commutation étant conçu pour diminuer une valeur du degré d'ouverture de détermination de manière à être inférieur à une valeur du degré d'ouverture de détermination qui est définie lorsque la commutation du mode de déplacement du véhicule n'est pas restreinte, dans une période allant du changement de l'étage d'engrenage de la transmission étant terminé jusqu'à l'écoulement du temps de restriction de commutation prédéterminé.

2. Appareil de commande selon la revendication 1, dans lequel
le dispositif de restriction de commutation est conçu pour empêcher la commutation du mode de déplacement vers le mode de déplacement électrique par le dispositif de commutation de mode de déplacement, dans une période allant du début de l'opération de changement de vitesse à la fin du changement de l'étage d'engrenage de la transmission.
